# EUROPEAN PATENT APPLICATION

(11) **EP 4 527 885 A1**
(43) Date of publication of application: **26.03.2025**
(21) Application number: 23872856.2
(22) Date of filing: 11.09.2023
(51) Int. Cl.: C08L 25/12, C08L 51/04, C08L 35/04

(54) **THERMOPLASTIC RESIN COMPOSITION**

(30) Priority: 26.09.2022 KR 20220121698
(71) Applicant: LG Chem, Ltd., Yeongdeungpo-gu Seoul 07336 (KR)
(72) Inventor: NAMGUNG, Ho, Daejeon 34122 (KR); KIM, Seong Lyong, Daejeon 34122 (KR); JUNG, Dae San, Daejeon 34122 (KR); HAN, Seung Hun, Daejeon 34122 (KR); NAM, Jin Oh, Daejeon 34122 (KR); KIM, Jin Ho, Daejeon 34122 (KR)
(74) Representative: Plasseraud IP
(86) International application number: PCT/KR2023/013589
(87) International publication number: WO 2024/071737

(57) **Abstract**

The present invention relates to a thermoplastic resin composition including: a diene-based graft polymer; a vinyl-based non-grafted polymer including an alkyl-substituted aromatic vinyl-based monomer unit and a vinyl cyanide-based monomer unit; a first maleimide-based non-grafted polymer including a maleimide-based monomer unit, an alkyl-unsubstituted aromatic vinyl-based monomer unit, and a vinyl cyanide-based monomer unit; and a second maleimide-based non-grafted polymer including a maleimide-based monomer unit and an alkyl-unsubstituted aromatic vinyl-based monomer unit, wherein the first maleimide-based non-grafted polymer has a lower glass transition temperature than the second maleimide-based non-grafted polymer.

## Description

### [Technical Field]

### Cross-Reference to Related Application

This application claims priority to and the benefit of Korean Patent Application No. 10-2022-0121698, filed on September 26, 2022, the entire contents of which are incorporated herein by reference.

### Technical Field

The present invention relates to a thermoplastic resin composition.

### [Background Art]

Diene-based graft polymers include a diene-based rubber polymer and a shell including an aromatic vinyl-based monomer unit and a vinyl cyanide-based monomer unit that are grafted to the diene-based rubber polymer. Compared to existing high strength polystyrene, diene-based graft polymers have high impact resistance, chemical resistance, thermal stability, colorability, fatigue resistance, rigidity, and processability. Due to these properties, diene-based rubber thermoplastic resin molded products produced from diene-based graft polymers are used as parts of automotive interior and exterior materials, office appliances, and various electrical and electronic products.

Diene-based thermoplastic resin compositions including a diene-based graft polymer can be used as a material for a rear lamp housing among automobile parts. Rear lamp housings can be classified into a bulb-type housing and a combined-type housing. The bulb-type housing can be manufactured by depositing aluminum directly on the surface of the housing, and the combined-type housing can be manufactured by producing internal components separately and then combining the components with the housing. However, due to the structural design characteristics of a rear lamp housing, in a model that generates a considerable amount of internal heat, the rear lamp housing cannot withstand the heat generated. Therefore, a super heat-resistant thermoplastic resin composition with improved heat resistance is required. However, the currently developed super heat-resistant thermoplastic resin composition has excellent heat resistance but is not suitable for the bulb-type housing due to the high diffuse reflectance of the aluminum-deposited surface. Besides, since the low melt flow index of the super heat-resistant thermoplastic resin composition leads to a reduction in processability, the super heat-resistant thermoplastic resin composition has limitations when used as a raw material for the rear lamp housing.

### [Related-Art Documents]

### [Patent Documents]

(Patent Document 1) KR10-2030120B

### [Disclosure]

### [Technical Problem]

The problem to be solved by present invention is directed to providing a thermoplastic resin composition with improved processability, impact resistance, heat resistance, and aluminum-deposited surface properties.

### [Technical Solution]

1) One aspect of the present invention provides a thermoplastic resin composition including: a diene-based graft polymer; a vinyl-based non-grafted polymer including an alkyl-substituted aromatic vinyl-based monomer unit and a vinyl cyanide-based monomer unit; a first maleimide-based non-grafted polymer including a maleimide-based monomer unit, an alkyl-unsubstituted aromatic vinyl-based monomer unit, and a vinyl cyanide-based monomer unit; and a second maleimide-based non-grafted polymer including a maleimide-based monomer unit and an alkyl-unsubstituted aromatic vinyl-based monomer unit, wherein the first maleimide-based non-grafted polymer has a lower glass transition temperature than the second maleimide-based non-grafted polymer.
2) According to 1), the present invention provides a thermoplastic resin composition, wherein the first maleimide-based non-grafted polymer has a glass transition temperature that is 10 to 30 °C lower than that of the second maleimide-based graft polymer.
3) According to 1) or 2), the present invention provides a thermoplastic resin composition, wherein the first maleimide-based non-grafted polymer has a glass transition temperature of 165 to 185 °C.
4) According to any one of 1) to 3), the present invention provides a thermoplastic resin composition, wherein the second maleimide-based non-grafted polymer has a glass transition temperature of 186 to 206 °C.
5) According to any one of 1) to 4), the present invention provides a thermoplastic resin composition, wherein the first maleimide-based non-grafted polymer is a terpolymer composed of a maleimide-based monomer unit, an alkyl-unsubstituted aromatic vinyl-based monomer unit, and a vinyl cyanide-based monomer unit.
6) According to any one of 1) to 5), the present invention provides a thermoplastic resin composition including 7.5 to 16.5 wt% of the first maleimide-based non-grafted polymer.
7) According to any one of 1) to 6), the present invention provides a thermoplastic resin composition, wherein the second maleimide-based non-grafted polymer is a bipolymer composed of a maleimide-based monomer unit and an alkyl-unsubstituted aromatic vinyl-based monomer unit.
8) According to any one of 1) to 7), the present invention provides a thermoplastic resin composition including 7.5 to 16.5 wt% of the second maleimide-based non-grafted polymer.
9) According to any one of 1) to 8), the present invention provides a thermoplastic resin composition, wherein the diene-based graft polymer comprises a diene-based rubber polymer and a shell including an alkyl-substituted or alkyl-unsubstituted aromatic vinyl-based monomer unit and a vinyl cyanide-based monomer unit that are grafted to the diene-based rubber polymer.
10) According to any one of 1) to 9), the present invention provides a thermoplastic resin composition including 22.0 to 30.0 wt% of the diene-based graft polymer.
11) According to any one of 1) to 10), the present invention provides a thermoplastic resin composition including a first diene-based graft polymer and a second diene-based graft polymer having diene-based rubber polymers with different average particle diameters.
12) According to 11), the present invention provides a thermoplastic resin composition, wherein the first diene-based graft polymer comprises a diene-based rubber polymer having an average particle diameter of 50 to 220 nm and a shell including an alkyl-substituted or alkyl-unsubstituted aromatic vinyl-based monomer unit and a vinyl cyanide-based monomer unit that are grafted to the diene-based rubber polymer.
13) According to 11) or 12), the present invention provides a thermoplastic resin composition, wherein the second diene-based graft polymer comprises a diene-based rubber polymer having an average particle diameter of 250 to 500 nm and a shell including an alkyl-substituted or alkyl-unsubstituted aromatic vinyl-based monomer unit and a vinyl cyanide-based monomer unit that are grafted to the diene-based rubber polymer.
14) According to any one of 11) to 13), the present invention provides a thermoplastic resin composition, wherein a weight ratio of the first diene-based graft polymer and the second diene-based graft polymer is 1:1.0 to 4.0.
15) According to any one of 1) to 14), the present invention provides a thermoplastic resin composition including 45.0 to 53.0 wt% of the vinyl-based non-grafted polymer.

### [Advantageous Effects]

A thermoplastic resin composition according to the present invention not only has excellent processability, impact resistance, heat resistance, and aluminum-deposited surface properties but also excellent tensile force and stress. Accordingly, the thermoplastic resin composition is suitable for a housing of an automotive rear lamp, which generates high temperature heat, and can be used in an automotive exterior material that generates high temperature heat.

### [Modes of the Invention]

Hereinafter, the present invention will be described in further detail to help in understanding the present invention.

Terms and words in this specification and claims should not be construed as limited to their conventional or dictionary meanings but should be construed as a meaning and concept consistent with the technical idea of the present invention based on the principle that the inventors can properly define the concept of terms in order to describe their invention in the best way.

In the present invention, a "diene-based rubber polymer" may be prepared by polymerizing diene-based monomers. The diene-based monomer may be one or more selected from the group consisting of 1,3-butadiene, isoprene, chloroprene, and piperylene, with 1,3-butadiene being preferred.

In the present invention, an alkyl-substituted aromatic vinyl-based monomer may be one or more selected from the group consisting of α-methyl styrene, α-ethyl styrene, p-methyl styrene, and 2,4-dimethyl styrene. A unit derived from an "alkyl-substituted aromatic vinyl-based monomer" may be an "alkyl-substituted aromatic vinyl-based monomer unit."

In the present invention, an alkyl-unsubstituted aromatic vinyl-based monomer may be one or more selected from the group consisting of styrene, p-fluorostyrene, p-chlorostyrene, and p-bromo styrene. A unit derived from an "alkyl-unsubstituted aromatic vinyl-based monomer" may be an "alkyl-unsubstituted aromatic vinyl-based monomer unit."

In the present invention, a vinyl cyanide-based monomer may be one or more selected from the group consisting of acrylonitrile, methacrylonitrile, (Z)-3-phenyl acrylonitrile, and α-chloro acrylonitrile, with acrylonitrile being preferred. A unit derived from a "vinyl cyanide-based monomer" may be a "vinyl cyanide-based monomer unit."

In the present invention, a maleimide-based monomer may be one or more selected from the group consisting of maleimide, N-methyl maleimide, N-ethyl maleimide, N-propyl maleimide, N-isopropyl maleimide, N-butyl maleimide, N-isobutyl maleimide, N-t-butyl maleimide, N-lauryl maleimide, N-cyclohexyl maleimide, N-phenyl maleimide, N-(4-chlorophenyl) maleimide, 2-methyl-N-phenyl maleimide, N-(4-bromophenyl) maleimide, N-(4-nitrophenyl) maleimide, N-(4-hydroxyphenyl) maleimide, N-(4-methoxyphenyl) maleimide, N-(4-carboxyphenyl) maleimide, and N-benzyl maleimide, with N-phenyl maleimide being preferable. A unit derived from a "maleimide-based monomer" may be a "maleimide-based monomer unit."

In the present invention, a weight-average molecular weight may be measured as a relative value with respect to a standard polystyrene sample by gel permeation chromatography using tetrahydrofuran as an eluent.

In the present invention, a glass transition temperature may be measured by differential scanning calorimetry.

In the present invention, an average particle diameter may be measured by dynamic light scattering, and specifically, using a Nicomp 380 instrument commercially available from Particle Sizing Systems. In the present invention, the average particle diameter may refer to an arithmetic mean particle diameter in the particle size distribution as measured by dynamic light scattering, that is, an average particle diameter based on a scattering intensity distribution.

### 1. Thermoplastic resin composition

A thermoplastic resin composition according to an embodiment of the present invention includes: 1) a diene-based graft polymer; 2) a vinyl-based non-grafted polymer including an alkyl-substituted aromatic vinyl-based monomer unit and a vinyl cyanide-based monomer unit; 3) a first maleimide-based non-grafted polymer including a maleimide-based monomer unit, an alkyl-unsubstituted aromatic vinyl-based monomer unit, and a vinyl cyanide-based monomer unit; and 4) a second maleimide-based non-grafted polymer including a maleimide-based monomer unit and an alkyl-unsubstituted aromatic vinyl-based monomer unit, wherein the first maleimide-based non-grafted polymer has a lower glass transition temperature than the second maleimide-based non-grafted polymer.

The present inventors found that when the thermoplastic resin composition includes both a first maleimide-based non-grafted polymer with a low glass transition temperature and a second maleimide-based non-grafted polymer with a high glass transition temperature, the impact resistance, aluminum-deposited surface properties, and heat resistance of the thermoplastic resin composition are all improved, and therefore, the thermoplastic resin composition is suitable for a rear lamp housing of an automobile. Based on the above finding, the present invention was completed.

Hereinafter, components of the thermoplastic resin composition according to an embodiment of the present invention will be described in detail.

### 1) Diene-based graft polymer

The diene-based graft polymer is a component that improves the impact resistance, tensile force, and stress of the thermoplastic resin composition. The diene-based graft polymer may include a diene-based rubber polymer and a shell including an aromatic vinyl-based monomer unit and a vinyl cyanide-based monomer unit that are grafted to the diene-based rubber polymer. In addition, the shell may include an aromatic vinyl-based monomer unit and a vinyl cyanide-based monomer unit that are not grafted to the diene-based rubber polymer.

The diene-based rubber polymer may have an average particle diameter of 50 to 500 nm, preferably 70 to 470 nm. When this condition is satisfied, the impact resistance and surface properties of the diene-based graft polymer may be improved.

The diene-based graft polymer may be included in an amount of 22.0 to 30.0 wt%, preferably 24.0 to 28.0 wt%, based on the total weight of the thermoplastic resin composition. When this condition is satisfied, excellent impact resistance, tensile force, and stress may be imparted to the thermoplastic resin composition while the processability and heat resistance of the thermoplastic resin composition are minimally affected.

**In** order to improve impact resistance, tensile force, and stress and maximize surface smoothness, the diene-based graft polymer may include a first diene-based graft polymer and a second diene-based graft polymer having diene-based rubber polymers with different average particle diameters.

The first diene-based graft polymer may include a diene-based rubber polymer having an average particle diameter of 50 to 220 nm, preferably 50 to 150 nm, more preferably 70 to 130 nm, and most preferably 90 to 110 nm, and a shell including an alkyl-substituted or alkyl-unsubstituted aromatic vinyl-based monomer unit and a vinyl cyanide-based monomer unit that are grafted to the diene-based rubber polymer. When the average particle diameter satisfies the above condition, the thermoplastic resin composition may have excellent tensile force and stress, and the surface smoothness of the thermoplastic resin composition may be maximized to achieve excellent aluminum-deposited surface properties.

The second diene-based graft polymer may include a diene-based rubber polymer having an average particle diameter of 250 to 500 nm, preferably 250 to 400 nm, more preferably 250 to 350 nm, and most preferably 280 to 320 nm, and a shell including an alkyl-substituted or alkyl-unsubstituted aromatic vinyl-based monomer unit and a vinyl cyanide-based monomer unit that are grafted to the diene-based rubber polymer. When the average particle diameter satisfies the above condition, the thermoplastic resin composition may have excellent impact resistance.

When the thermoplastic resin composition is used in a field requiring high tensile force, stress, and surface smoothness, an excess amount of the first diene-based rubber graft polymer may be contained in the thermoplastic resin composition. When the thermoplastic resin composition is used in a field requiring high impact strength, an excess amount of the second diene-based graft polymer may be contained in the thermoplastic resin composition.

When the thermoplastic resin composition is used for a rear lamp housing of an automobile, the weight ratio of the first diene-based graft polymer and the second diene-based graft polymer may be 1:1.0 to 4.0, preferably 1:2.0 to 3.8, and more preferably 1:3.0 to 3.5. When this condition is satisfied, the tensile force, stress, and surface smoothness of the thermoplastic resin composition are improved while a reduction in impact resistance is minimized, and therefore, a thermoplastic resin composition that is more suitable for a rear lamp housing of an automobile may be prepared.

The diene-based rubber graft polymer may be a graft polymer obtained by graft polymerizing styrene and acrylonitrile to a polybutadiene rubber polymer.

### 2) Vinyl-based non-grafted polymer

The vinyl-based non-grafted polymer is a component that improves the processability, chemical resistance, and heat resistance of the thermoplastic resin composition.

The vinyl-based non-grafted polymer includes an alkyl-substituted aromatic vinyl-based monomer unit and a vinyl cyanide-based monomer unit.

The vinyl-based non-grafted polymer may include 67 to 75 wt%, preferably 69 to 73 wt%, of the alkyl-substituted aromatic vinyl-based monomer unit. When this condition is satisfied, the heat resistance of the vinyl-based non-grafted polymer may be improved.

The vinyl-based non-grafted polymer may include 25 to 33 wt%, preferably 27 to 31 wt%, of the vinyl cyanide-based monomer unit. When this condition is satisfied, the chemical resistance of the vinyl-based non-grafted polymer may be improved.

The vinyl-based non-grafted polymer may have a weight-average molecular weight of 80,000 to 120,000 g/mol, preferably 90,000 to 110,000 g/mol. When this condition is satisfied, the processability and mechanical properties of the vinyl-based non-grafted polymer may be improved.

The vinyl-based non-grafted polymer may be included in an amount of 45.0 to 53.0 wt%, preferably 47.0 to 51.0 wt%, based on the total weight of the thermoplastic resin composition. When this condition is satisfied, excellent processability, chemical resistance, and heat resistance may be imparted to the thermoplastic resin composition.

### 3) First maleimide-based non-grafted polymer

The first maleimide-based non-grafted polymer is a component that improves impact resistance, tensile force, processability, and aluminum-deposited surface properties through synergy with the diene-based graft polymer.

The first maleimide-based non-grafted polymer includes a maleimide-based monomer unit, an alkyl-unsubstituted aromatic vinyl-based monomer unit, and a vinyl cyanide-based monomer unit. Since the first maleimide-based non-grafted polymer includes an alkyl-unsubstituted aromatic vinyl-based monomer unit and a vinyl cyanide-based monomer unit, the first maleimide-based non-grafted polymer has high compatibility with the diene-based graft polymer and vinyl-based non-grafted polymer. Therefore, the synergy with the diene-based graft polymer and vinyl-based non-grafted polymer may improve impact resistance, tensile force, processability, and aluminum-deposited surface properties.

The first maleimide-based non-grafted polymer has a lower glass transition temperature than the second maleimide-based non-grafted polymer, which will be described later. When this condition is satisfied, impact resistance and aluminum-deposited surface properties are improved compared to a case where the first maleimide-based non-grafted polymer is not included, and heat resistance is improved compared to a case where the second maleimide-based non-grafted polymer is not included.

The first maleimide-based non-grafted polymer may have a glass transition temperature that is 10 to 30 °C, preferably 15 to 25 °C, lower than that of the second maleimide-based non-grafted polymer, which will be described later. When this condition is satisfied, a reduction in impact resistance and aluminum-deposited surface properties of the thermoplastic resin composition due to the second maleimide-based non-grafted polymer may be minimized, and a reduction in heat resistance of the thermoplastic resin composition due to the first maleimide-based non-grafted polymer may be minimized.

The first maleimide-based non-grafted polymer may have a glass transition temperature of 165 to 185 °C, preferably 170 to 180 °C. When this condition is satisfied, a relatively small amount of maleimide-based monomer units that improve heat resistance may be included and a relatively excess amount of alkyl-unsubstituted aromatic vinyl-based monomer units and vinyl cyanide-based monomer units, which improve compatibility with the diene-based graft polymer and the vinyl-based non-grafted polymer, may be included. As compatibility between the first maleimide-based non-grafted polymer, the diene-based graft polymer, and the vinyl-based non-grafted polymer is improved, impact resistance and aluminum-deposited surface properties may be further improved. In addition, the heat resistance of the thermoplastic resin composition may be improved, and therefore, the thermoplastic resin composition may be used for a rear lamp housing of an automobile.

The first maleimide-based non-grafted polymer may have a weight-average molecular weight of 125,000 to 155,000 g/mol, preferably 130,000 to 150,000 g/mol. When this condition is satisfied, since the weight-average molecular weight of the first maleimide-based non-grafted polymer is similar to that of the vinyl-based non-grafted polymer and the second maleimide-based non-grafted polymer, compatibility with the vinyl-based non-grafted polymer and the second maleimide-based non-grafted polymer may be improved.

The first maleimide-based non-grafted polymer may be a terpolymer composed of a maleimide-based monomer unit, a vinyl cyanide-based monomer unit, and an alkyl-unsubstituted aromatic vinyl-based monomer unit. Specifically, the first maleimide-based non-grafted polymer may be an N-phenylmaleimide/styrene/acrylonitrile polymer.

The first maleimide-based non-grafted polymer may be included in an amount of 7.5 to 16.5 wt%, preferably 10.0 to 15.0 wt%, based on the total weight of the thermoplastic resin composition. When this condition is satisfied, the impact resistance and aluminum-deposited surface properties of the thermoplastic resin composition are improved, and a reduction in tensile force and stress may be minimized.

### 4) Second maleimide-based non-grafted polymer

The second maleimide-based non-grafted polymer is a component that improves the heat resistance of the thermoplastic resin composition.

The second maleimide-based non-grafted polymer includes a maleimide-based monomer unit and an alkyl-unsubstituted aromatic vinyl-based monomer unit. Since the second maleimide-based non-grafted polymer includes a maleimide-based monomer unit and a vinyl cyanide-based monomer unit, the second maleimide-based non-grafted polymer has excellent compatibility with the first maleimide-based non-grafted polymer. Therefore, heat resistance may be significantly improved through synergy between the first and second maleimide-based non-grafted polymers.

The second maleimide-based non-grafted polymer may have a glass transition temperature of 186 to 206 °C, preferably 191 to 201 °C. When this condition is satisfied, the heat resistance of the thermoplastic resin composition may be significantly improved.

The second maleimide-based non-grafted polymer may be a bipolymer composed of a maleimide-based monomer unit and an alkyl-unsubstituted aromatic vinyl-based monomer unit. Specifically, the second maleimide-based non-grafted polymer may be an N-phenyl maleimide/styrene polymer.

The second maleimide-based non-grafted polymer may be included in an amount of 7.5 to 16.5 wt%, preferably 10.0 to 15.0 wt%, based on the total weight of the thermoplastic resin composition. When this condition is satisfied, the heat resistance of the thermoplastic resin composition is improved, and a reduction in processability, impact resistance, tensile force, and stress may be minimized.

Hereinafter, embodiments of the present invention will be described in detail so that those skilled in the art can easily carry out the present invention. However, the present invention may be embodied in several different forms and is not limited to the embodiments described herein.

### Examples and Comparative Examples

Descriptions of the components used in examples and comparative examples below are as follows.

First diene-based graft polymer: DP229M commercially available from LG Chem (including a polybutadiene rubber polymer having an average particle diameter of 100 nm and a shell including a styrene unit and an acrylonitrile unit that are grafted to the polybutadiene rubber polymer)

Second diene-based graft polymer: DP270E commercially available from LG Chem (including a polybutadiene rubber polymer having an average particle diameter of 300 nm and a shell including a styrene unit and an acrylonitrile unit that are grafted to the polybutadiene rubber polymer)

Vinyl-based non-grafted polymer: 200UH commercially available from LG Chem (α-methyl styrene/acrylonitrile non-grafted polymer having a weight-average molecular weight of 100,000 g/mol, prepared by polymerization of 71 wt% α-methyl styrene and 29 wt% acrylonitrile)

SAN polymer: 95RF commercially available from LG Chem (styrene/acrylonitrile non-grafted polymer having a weight-average molecular weight of 100,000 g/mol, prepared by polymerization of 71 wt% styrene and 29 wt% acrylonitrile)

First maleimide-based non-grafted polymer: IPX-02 commercially available from DENKA (N-phenylmaleimide/styrene/acrylonitrile non-grafted polymer having a weight-average molecular weight of 140,000 g/mol and a glass transition temperature of 175 °C)

First maleimide-based non-grafted polymer: IPX-02 commercially available from DENKA (N-phenylmaleimide/styrene/acrylonitrile terpolymer having a weight-average molecular weight of 140,000 g/mol and a glass transition temperature of 175 °C)

Second maleimide-based non-grafted polymer: MS-NB commercially available from DENKA (N-phenylmaleimide/styrene bipolymer with a weight-average molecular weight of 140,000 g/mol and a glass transition temperature of 196 °C)

The components described above were mixed in amounts shown in Table 1 and Table 2 below and stirred to prepare thermoplastic resin compositions.

### Experimental Example 1

Each thermoplastic resin composition of the examples and comparative examples was extruded to prepare a pellet. The pellet was evaluated using the method described below and results thereof are shown in Table 1 and Table 2 below.
(1) Melt flow index (g/10 min): Melt flow index was measured according to ASTM D1238 under conditions of 220 °C and 10 kg. In the present invention, processability was judged to be excellent when the melt flow index was 3.0 g/10 min or more.

### Experimental Example 2

Each thermoplastic resin composition of the examples and comparative examples was extruded and injection-molded to prepare a sample. The sample was evaluated using the methods described below and results thereof are shown in Table 1 and Table 2 below.
(2) IZOD impact strength (kg·cm/cm, 1/4 inch): IZOD impact strength was measured according to ASTM D256. In the present invention, impact resistance was judged to be excellent when the IZOD impact strength was 9.0 kg·cm/cm or more.
(3) Tensile strength (kg/cm²) and tensile elongation (%): Tensile strength and tensile elongation were measured according to ASTM D638. In the present invention, tensile force was judged to be excellent when tensile strength was 440 kg/cm² or more and the tensile elongation was 40% or more.
(4) Flexural strength (kg/cm²): Flexural strength was measured according to ASTM D790. In the present invention, stress was judged to be excellent when the flexural strength was 650 kg/cm² or more.
(5) Heat deflection temperature (°C): Heat deflection temperature was measured according to ASTM D648 under unannealed conditions. In the present invention, heat resistance was judged to be excellent when the heat deflection temperature was 109 °C or higher.

### Experimental Example 3

Each thermoplastic resin composition of the examples and comparative examples was extruded and injection-molded to prepare a 10 cm×10 cm sample, and Al was vacuum deposited on the surface of the sample using a vacuum deposition device (High Vacuum Deposition Device manufactured by Daehan Vacuum Engineering). The physical properties of the sample on which an Al film was formed were measured using the method described below and results thereof are shown in Table 1 and Table 2.

(6) Diffuse reflectance (%): Diffuse reflectance was measured using a surface gloss meter (Reflectometer (TR-1100AD) commercially available from Tokyo Denshoku Co., Ltd.). Since diffuse reflectance is greatly affected by sensitivity which changes depending on gases and surface properties, the state of the vacuum deposited surface could be inferred from the diffuse reflectance. In the present invention, the condition of the vacuum deposited surface was judged to be excellent when the diffuse reflectance was 6.0% or less.

### Experimental Example 4

Each thermoplastic resin composition of the examples and comparative examples was extruded and injection-molded to prepare a 10 cm×10 cm×3 cm sample, and the physical properties of the sample were measured using the methods described below and results thereof are shown in Table 1 and Table 2.
(7) Whether cracks occurred due to hammering: The same area of the fixed sample was hit 10 times with a rubber hammer to check whether cracks occurred.
(8) Whether cracks occurred due to a falling ball: A ball dropping device using a 5 kg ball was used to check whether cracks occurred. The ball dropping device is a free fall test device that fixes a ball at a height with a magnet and then removes the magnetic force of the magnet to make the ball fall freely. The force applied to the sample was increased by raising the height of the ball in 10 cm intervals to check whether cracks occurred.

×: No cracks ∘: Cracks

**[Table 1]**

| Classification | | Examp le 1 | Examp le 2 | Examp le 3 | Examp le 4 | Examp le 5 | Examp le 6 |
|---|---|---|---|---|---|---|---|
| First diene-based graft polymer (parts by weight) | | 6.0 | 6.0 | 6.0 | 6.0 | 6.0 | 6.0 |
| Second diene-based graft polymer (parts by weight) | | 20.0 | 20.0 | 20.0 | 20.0 | 20.0 | 20.0 |
| Vinyl-based non-grafted polymer (parts by weight) | | 49.0 | 49.0 | 49.0 | 47.0 | 51.0 | 51.0 |
| First maleimide-based non-grafted polymer (parts by weight) | | 10.0 | 12.5 | 15.0 | 13.5 | 11.5 | 13.0 |
| Second maleimide-based non-grafted polymer (parts by weight) | | 15.0 | 12.5 | 10.0 | 13.5 | 11.5 | 10.0 |
| Melt flow index | | 3.9 | 3.8 | 3.6 | 3.3 | 4.2 | 4.1 |
| Impact strength | | 10.0 | 10.8 | 11.2 | 10.5 | 10.4 | 10.6 |
| Tensile strength | | 440 | 446 | 458 | 465 | 441 | 448 |
| Tensile elongation | | 45 | 48 | 48 | 42 | 46 | 45 |
| Flexural strength | | 675 | 683 | 700 | 706 | 661 | 671 |
| Heat deflection temperature | | 112.0 | 111.8 | 111.5 | 112.5 | 110.9 | 110.9 |
| Diffuse reflectance | | 5.8 | 5.5 | 5.1 | 5.6 | 5.3 | 5.2 |
| Cracks occurred due to hammering | | × | × | × | × | × | × |
| Cracks occurred due to a falling ball | 30 cm | × | × | × | × | × | × |
| | 40 cm | × | × | × | × | × | × |
| | 50 cm | × | × | × | × | × | × |
| | 60 cm | × | × | × | × | × | × |
| | 70 cm | × | × | × | × | × | × |
| | 80 cm | × | × | × | × | × | × |

**[Table 2]**

| Classification | Comparative Example 1 | Comparative Example 2 | Comparative Example 3 | |
|---|---|---|---|---|
| First diene-based graft polymer (parts by weight) | 6.0 | 6.0 | 6.0 | |
| Second diene-based graft polymer (parts by weight) | 20.0 | 20.0 | 20.0 | |
| Vinyl-based non-grafted polymer (parts by weight) | 0.0 | 49.0 | 49.0 | |
| SAN polymer | 49.0 | 0.0 | 0.0 | |
| First maleimide-based non-grafted polymer (parts by weight) | 10.0 | 0.0 | 25.0 | |
| Second maleimide-based non-grafted polymer (parts by weight) | 15.0 | 25.0 | 0.0 | |
| Melt flow index | 7.5 | 4.3 | 2.3 | |
| Impact strength | | 12.6 | 10.3 | 8.0 |
| Tensile strength | | 435 | 496 | 504 |
| Tensile elongation | | 38 | 30 | 24 |
| Flexural strength | | 635 | 696 | 718 |
| Heat deflection temperature | | 106.6 | 107.2 | 113.3 |
| Diffuse reflectance | | 5.9 | 5.3 | 6.8 |
| Cracks occurred due to hammering | | × | ○ | ○ |
| Cracks occurred due to a falling ball | 30 cm | × | ○ | ○ |
| | 40 cm | × | ○ | ○ |
| | 50 cm | × | × | ○ |
| | 60 cm | × | × | ○ |
| | 70 cm | × | × | ○ |
| | 80 cm | × | × | ○ |

Referring to Table 1 and Table 2, the melt flow index, impact strength, tensile strength, tensile elongation, flexural strength, heat deflection temperature, and diffuse reflectance of Examples 1 to 6 were all adequate, and no cracks occurred due to hammering and a falling ball in Examples 1 to 6. These results showed that Examples 1 to 6 had excellent processability, impact resistance, tensile force, stress, heat resistance, and aluminum-deposited surface properties.

Referring to Examples 1 to 3, in which the total amount of the first maleimide-based non-grafted polymer and the second maleimide-based non-grafted polymer was the same, but the weight ratio of the first maleimide-based non-grafted polymer and the second maleimide-based non-grafted polymer was different, it was found that impact resistance, tensile force, stress, and aluminum-deposited surface properties were improved as the content of first maleimide-based non-grafted polymer increased, and heat resistance was improved as the content of second maleimide-based non-grafted polymer increased.

Referring to Examples 2, 4, and 5, in which the weight ratio of the first maleimide-based non-grafted polymer and the second maleimide-based non-grafted polymer was 1:1, but the total amount of the first maleimide-based non-grafted polymer and the second maleimide-based non-grafted polymer was different, it was found that as the total amount of the first and second maleimide-based non-grafted polymers increased, tensile strength, flexural strength, and the heat deflection temperature increased, and as the total amount of the first and second maleimide-based non-grafted polymers decreased, the melt flow index increased and diffuse reflectance decreased. These results showed that as the total amount of the first and second maleimide-based non-grafted polymers increased, tensile force, stress, and heat resistance were improved, and as the total amount of the first and second maleimide-based non-grafted polymers decreased, processability and aluminum-deposited surface properties were improved. Additionally, in the case of Example 2, 4, and 5, it can be seen that the heat deflection temperature was affected by the content of the second maleimide-based non-grafted polymer rather than the content of the vinyl-based non-grafted polymer.

On the other hand, in the case of Comparative Example 1 including a styrene/acrylonitrile non-grafted polymer instead of an α-methyl styrene/acrylonitrile non-grafted polymer, tensile strength, tensile elongation, and flexural strength were low, and the heat deflection temperature was low. These results showed that Comparative Example 1 had reduced tensile force, stress, and heat resistance.

In the case of Comparative Example 2, which did not include the first maleimide-based non-grafted polymer, tensile strength was high, but tensile elongation and the heat deflection temperature were low, and cracks occurred due to hammering and a falling ball. These results showed that Comparative Example 2 had reduced tensile force, heat resistance, and impact resistance.

In the case of Comparative Example 3, which did not include the second maleimide-based non-grafted polymer, the melt flow index and impact strength were low, and tensile strength was high, but tensile elongation was low, diffuse reflectance was high, and cracks occurred due to hammering and a falling ball. These results showed that Comparative Example 3 had reduced processability, impact resistance, tensile force, and aluminum-deposited surface properties.

## Claims

1. A thermoplastic resin composition comprising:
a diene-based graft polymer;
a vinyl-based non-grafted polymer including an alkyl-substituted aromatic vinyl-based monomer unit and a vinyl cyanide-based monomer unit;
a first maleimide-based non-grafted polymer including a maleimide-based monomer unit, an alkyl-unsubstituted aromatic vinyl-based monomer unit, and a vinyl cyanide-based monomer unit; and
a second maleimide-based non-grafted polymer including a maleimide-based monomer unit and an alkyl-unsubstituted aromatic vinyl-based monomer unit,
wherein the first maleimide-based non-grafted polymer has a lower glass transition temperature than the second maleimide-based non-grafted polymer.

2. The thermoplastic resin composition of claim 1, wherein the first maleimide-based non-grafted polymer has a glass transition temperature that is 10 to 30 °C lower than that of the second maleimide-based non-grafted polymer.

3. The thermoplastic resin composition of claim 2, wherein the first maleimide-based non-grafted polymer has a glass transition temperature of 165 to 185 °C.

4. The thermoplastic resin composition of claim 2, wherein the second maleimide-based non-grafted polymer has a glass transition temperature of 186 to 206 °C.

5. The thermoplastic resin composition of claim 1, wherein the first maleimide-based non-grafted polymer is a terpolymer composed of a maleimide-based monomer unit, an alkyl-unsubstituted aromatic vinyl-based monomer unit, and a vinyl cyanide-based monomer unit.

6. The thermoplastic resin composition of claim 1, comprising 7.5 to 16.5 wt% of the first maleimide-based non-grafted polymer.

7. The thermoplastic resin composition of claim 1, wherein the second maleimide-based non-grafted polymer is a bipolymer composed of a maleimide-based monomer unit and an alkyl-unsubstituted aromatic vinyl-based monomer unit.

8. The thermoplastic resin composition of claim 1, comprising 7.5 to 16.5 wt% of the second maleimide-based non-grafted polymer.

9. The thermoplastic resin composition of claim 1, wherein the diene-based graft polymer comprises a diene-based rubber polymer and a shell including an alkyl-substituted or alkyl-unsubstituted aromatic vinyl-based monomer unit and a vinyl cyanide-based monomer unit that are grafted to the diene-based rubber polymer.

10. The thermoplastic resin composition of claim 1, comprising 22.0 to 30.0 wt% of the diene-based graft polymer.

11. The thermoplastic resin composition of claim 1, comprising a first diene-based graft polymer and a second diene-based graft polymer having diene-based rubber polymers with different average particle diameters.

12. The thermoplastic resin composition of claim 11, wherein the first diene-based graft polymer comprises a diene-based rubber polymer having an average particle diameter of 50 to 220 nm and a shell including an alkyl-substituted or alkyl-unsubstituted aromatic vinyl-based monomer unit and a vinyl cyanide-based monomer unit that are grafted to the diene-based rubber polymer.

13. The thermoplastic resin composition of claim 11, wherein the second diene-based graft polymer comprises a diene-based rubber polymer having an average particle diameter of 250 to 500 nm and a shell including an alkyl-substituted or alkyl-unsubstituted aromatic vinyl-based monomer unit and a vinyl cyanide-based monomer unit that are grafted to the diene-based rubber polymer.

14. The thermoplastic resin composition of claim 11, wherein a weight ratio of the first diene-based graft polymer and the second diene-based graft polymer is 1:1.0 to 4.0.

15. The thermoplastic resin composition of claim 1, comprising 45.0 to 53.0 wt% of the vinyl-based non-grafted polymer.
